# EUROPEAN PATENT SPECIFICATION

(11) **EP 3 726 354 B1**
(45) Date of publication and mention of the grant of the patent: **10.09.2025**
(21) Application number: 18887721.1
(22) Date of filing: 13.12.2018
(51) Int. Cl.: B60K 35/10, B60K 35/22, G06F 9/451

(54) **VEHICLE-MOUNTED TERMINAL DEVICE, DISPLAY CONTROL METHOD AND APPARATUS, COMPUTER DEVICE, AND RECORDING MEDIUM**
FAHRZEUGSEITIGES ENDGERÄT, ANZEIGESTEUERVERFAHREN UND VORRICHTUNG, COMPUTERVORRICHTUNG UND AUFZEICHNUNGSMEDIUM
DISPOSITIF TERMINAL MONTÉ SUR VÉHICULE, PROCÉDÉ ET APPAREIL DE COMMANDE D'AFFICHAGE, DISPOSITIF INFORMATIQUE ET SUPPORT D'ENREGISTREMENT

(30) Priority: 15.12.2017 CN 201711346187
(43) Date of publication of application: 21.10.2020
(73) Proprietor: NIO (Anhui) Holding Co., Ltd., Hefei City, Anhui Province (CN)
(72) Inventor: DAI, Chenglong, Shanghai (CN); SHEN, Fangzhu, Shanghai (CN); LIANG, Zhanzhao, Shanghai (CN)
(74) Representative: Vossius & Partner Patentanwälte Rechtsanwälte mbB
(86) International application number: PCT/CN2018/120783
(87) International publication number: WO 2019/114778

(56) References cited:
- EP-A1- 2 584 445
- EP-A2- 1 247 686
- CN-A- 105 573 767
- CN-A- 106 227 520
- CN-A- 107 329 663
- DE-A1- 10 132 956
- DE-A1- 102006 044 800
- US-A1- 2012 075 335
- US-A1- 2016 044 088
- US-A1- 2016 200 195

## Description

### Technical Field

The invention relates to the field of automobiles, and more particularly to an onboard terminal device, a display control method, a display control apparatus, a computer device, and a recording medium.

### Background Art

Existing head unit applications, as exemplified by US 2012/075335 A1, are all designed in the form of native stack columns of Android. Since there is only a relationship Order of Arrival between interface hierarchies, they all exhibit as a hierarchical superimposition state, and the degree of upset in logic between interfaces increases accordingly. However, since a driver needs to quickly switch the display of an interface during driving, the existing solution is obviously not suitable on a head unit, and this will easily distract the driver's attention for a long time, thereby affecting driving safety.

### Summary of the Invention

In order to overcome one or more of the above-mentioned shortcomings or other shortcomings, the invention is implemented by using the technical solutions as stipulated in the independent claim 1-4.

Compared with the prior art, the invention can obtain the beneficial effects as follows: according to the invention, a mutual exclusion mechanism is added to a head unit system to reduce hierarchical relationships, such that a driver's interactive behavior is brief and easy, which, in turn, allows the driver to be able to quickly get back to the required interface to ensure driving safety.

### Brief Description of the Drawings

Fig. 1 is an example block diagram of an onboard terminal device according to one implementation of the invention.
Fig. 2 is a schematic diagram of hierarchies in a display interface according to one embodiment of the invention.
Fig. 3 is an example flowchart of a display control method according to one implementation of the invention.
Fig. 4 is a schematic diagram of modules in a display control apparatus (i.e., an onboard terminal device) according to one implementation of the invention.
Fig. 5 is an example block diagram of a computer device according to one implementation of the invention that is configured to perform a display control method according to one implementation of the invention.

### Detailed Description of Embodiments

The onboard terminal device, the display control method, the display control apparatus and the computer device according to the invention will be further described below in detail in conjunction with the accompanying drawings. It should be noted that the following detailed description of embodiments is exemplary rather than limiting, and is intended to provide a basic understanding of the invention, but not to confirm key or decisive elements of the invention or limit the scope of protection.

The invention is described below with reference to block diagram illustrations, block diagrams and/or flowcharts of the method and apparatus in the embodiments of the invention. It should be understood that each block of the flowchart illustrations and/or the block diagrams and combinations of the flowchart illustrations and/or the block diagrams may be implemented by computer program instructions. These computer program instructions may be provided to a processor of a general-purpose computer, a special-purpose computer or other programmable data processing devices to form a machine, such that the instructions, which are executed by the processor of the computer or the other programmable data processing devices, create components for implementing functions/operations specified in the flowcharts and/or blocks and/or one or more flow block diagrams.

These computer program instructions may be stored in a computer-readable memory and may instruct a computer or other programmable processors to implement functions in a specific manner, so that these instructions stored in the computer-readable memory constitute an article of manufacture, which contains instruction components for implementing the functions/operations specified in one or more blocks of the flowcharts and/or block diagrams.

These computer program instructions may be loaded onto a computer or other programmable data processors to enable a series of operational steps to be executed on the computer or the other programmable processors, so as to constitute a computer-implemented process, so that these instructions executed on the computer or the other programmable data processors provide steps for implementing the functions or operations specified in one or more blocks of the flowcharts and/or block diagrams. It should also be noted that in some alternative implementations, the functions/operations shown in the blocks may occur in an order different from that shown in the flowchart. For example, two blocks shown in sequence may actually be executed substantially simultaneously or may sometimes be executed in a reverse order, which depends on the functions/operations involved.

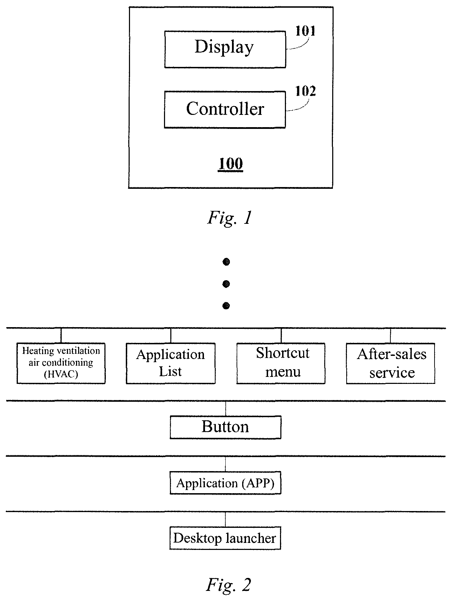

An example block diagram of an onboard terminal device according to one implementation of the invention will be described below in conjunction with Fig. 1.

Fig. 1 is an example block diagram of an onboard terminal device according to one implementation of the invention. The onboard terminal device 100 may be mounted on a vehicle (such as an electric vehicle or other types of vehicles). For example, it may be specifically an onboard console apparatus provided with a display 101 similar to a console screen and a controller 102 similar to an ECU, wherein the display 101 may provide various user interfaces (UIs) and one or more interactive elements (not shown) on the user interfaces (UIs) that are configured to implement various functions, and the controller 102 can control various operations including a display operation.

In one embodiment, the onboard terminal device 100 may further comprise one or more input sensors configured to provide the controller 102 with a user input or user instruction. The controller 102 may analyze the user input or user instruction to identify an interactive element of a user interface affected by the user input or user instruction and perform a function associated with the identified interactive element. For example, the controller 102 may identify an operated interactive element and cause the display 101 to display an associated display interface in response to the user input or user instruction.

Specifically, the one or more input sensors may be, for example, touch sensors, which may be arranged on the display 101 or arranged integrally with the display 101. In one example, the one or more input sensors may detect a direct contact of a user's finger or the like. Based on the position of the contact on the user interface (UI), the controller 102 may identify a corresponding interactive element related to the current position of the contact, and may open a display interface associated with the interactive element.

The one or more input sensors may also be, for example, acoustic input sensors, such as microphones, which may detect a speech command indicated by a required interactive element. For example, the user may identify the required interactive element with a tag or any other suitable identifier, and may also describe a required action to be performed that is related to the required interactive element. The controller 102 may identify the speech command, and submit, to the user interface or its processing component or engine, data for characterizing an interaction.

Although the onboard terminal device 100 has been described as comprising several components, including the display 101 and the controller 102, and one or more input sensors, it should be understood that the onboard terminal device 100 may further comprise other output devices of the same or other modes, such as a speaker or a vibrotactile feedback layer, or may comprise other input sensors, such as a keyboard, a camera, a depth sensor, an interface that can be connected to an external input device, etc.

In conjunction with Figs. 1 and 2, the display 101 is configured to provide a plurality of display interfaces. The plurality of display interfaces include, but are not limited to, a desktop Launcher display interface, an application (APP) display interface, a Button display interface, a heating ventilation air conditioning (HVAC) display interface, an application list (APP List) display interface, a shortcut menu (Shortcut) display interface, an after-sales service (NIO Service) display interface, etc. shown in Fig. 2.

In conjunction with Figs. 1 and 2, the controller 102 is configured to compare, in response to an instruction for newly adding a display interface from the plurality of display interfaces for displaying, a hierarchical attribute of a predetermined current display interface with a hierarchical attribute of the display interface to be newly added, and perform, based on the result of the comparison, a corresponding operation on the current display interface and the display interface to be newly added. The controller 102 is further configured to control, where the hierarchical attribute of the current display interface is different from the hierarchical attribute of the display interface to be newly added, or where the hierarchical attribute of the current display interface and the hierarchical attribute of the display interface to be newly added are the same and are both hierarchical superimposition attributes, the display 101 to perform displaying in such a way that the display interface to be newly added is superimposed on the current display interface. The controller 102 is further configured to control, where the hierarchical attribute of the current display interface and the hierarchical attribute of the display interface to be newly added are the same and are both hierarchical mutual exclusion attributes, the display 101 to perform displaying in such a way that the current display interface is replaced with the display interface to be newly added by closing the current display interface.

The operating of the display 101 and the controller 102 in Fig. 1 will be described below in detail using Fig. 2 as an example. Fig. 2 is a schematic diagram of hierarchies in a display interface according to one embodiment of the invention. In the example of Fig. 2, the display 101 may provide a plurality of display interfaces, including various display interfaces shown in Fig. 2. It is assumed that hierarchical attributes of these display interfaces are predetermined as follows: the HVAC display interface, the APP List display interface, the Shortcut display interface, and the NIO Service display interface are all of hierarchical mutual exclusion attributes, while other display interfaces are of hierarchical superimposition attributes. With regard to the operating of the display 101 and the controller 102 according to one implementation of the invention, for example, where the current display interface is the APP display interface, when a user performs an interactive operation on an interactive element related to a button to open the Button display interface, the controller 102 compares, in response to the user's instruction, a hierarchical attribute of the currently displayed APP display interface with a hierarchical attribute of the Button display interface to be newly added; and because the hierarchical attributes of the two display interfaces are both hierarchical superimposition attributes, the controller 102 controls the display 101 to perform displaying in such a way that the Button display interface is superimposed on the currently displayed APP display interface. Moreover, for example, when the current display interface is changed to the Button display interface due to the above process, the user performs an interactive operation on an interactive element related to an air conditioner to open the HVAC display interface, and in response to this, the controller 102 compares a hierarchical attribute of the currently displayed Button display interface with a hierarchical attribute of the HVAC display interface to be newly added; and because the two display interfaces are different from each other in terms of the hierarchical attribute (that is, the former is of the hierarchical superimposition attribute and the latter is of the hierarchical mutual exclusion attribute), the controller 102 controls the display 101 to perform displaying in such a way that the HVAC display interface is superimposed on the currently displayed Button display interface. Moreover, for example, when the current display interface is changed to the HVAC display interface due to the above process, the user performs an interactive operation on an interactive element related to a shortcut menu to open the Shortcut display interface, and in response to this, the controller 102 compares a hierarchical attribute of the currently displayed HVAC display interface with a hierarchical attribute of the Shortcut display interface to be newly added; and because the hierarchical attributes of the two display interfaces are both hierarchical mutual exclusion attributes, the controller 102 controls the display 101 to perform displaying in such a way that the currently displayed HVAC display interface is replaced with the Shortcut display interface to be newly added by closing the currently displayed HVAC display interface.

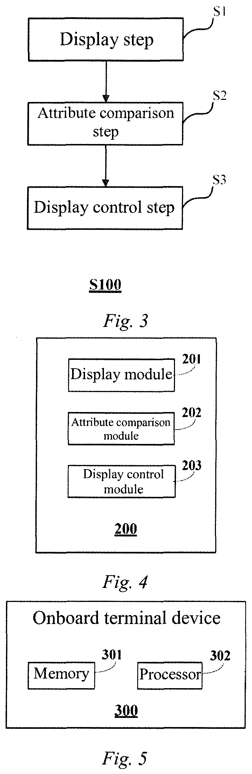

A display control method for an onboard terminal device according to one implementation of the invention will be described below in conjunction with Fig. 3.

As shown in Fig. 3, the display control method S100 comprises a display step (S1), in which the display 101 provides a plurality of display interfaces.

Moreover, as shown in Fig. 3, the display control method S100 comprises an attribute comparison step (S2), in which the controller 102 compares, in response to an instruction for newly adding a display interface from the plurality of display interfaces for displaying, a hierarchical attribute of a predetermined current display interface with a hierarchical attribute of the display interface to be newly added.

Moreover, as shown in Fig. 3, the display control method S100 comprises a display control step (S3), in which the controller 102 performs, based on the result of the comparison in S2, a corresponding operation on the current display interface and the display interface to be newly added. For example, in one embodiment, in the display control step, where the hierarchical attribute of the current display interface is different from the hierarchical attribute of the display interface to be newly added, or where the hierarchical attribute of the current display interface and the hierarchical attribute of the display interface to be newly added are the same and are both hierarchical superimposition attributes, the controller 102 controls the display 101 to perform displaying in such a way that the display interface to be newly added is superimposed on the current display interface. In addition, in another embodiment, in the display control step, where the hierarchical attribute of the current display interface and the hierarchical attribute of the display interface to be newly added are the same and are both hierarchical mutual exclusion attributes, the controller 102 controls the display 101 to perform displaying in such a way that the current display interface is replaced with the display interface to be newly added by closing the current display interface.

A schematic diagram of modules in a display control apparatus (i.e., an onboard terminal device) according to one implementation of the invention will be described below in conjunction with Fig. 4. As shown in Fig. 4, the display control apparatus (i.e., the onboard terminal device) 200 comprises a display module 201 configured to provide a plurality of display interfaces. The plurality of display interfaces include, but are not limited to, a desktop Launcher display interface, an application (APP) display interface, a Button display interface, a heating ventilation air conditioning (HVAC) display interface, an application list (APP List) display interface, a shortcut menu (Shortcut) display interface, an after-sales service (NIO Service) display interface, etc. shown in Fig. 2.

Moreover, as shown in Fig. 4, the display control apparatus (i.e., the onboard terminal device) 200 further comprises an attribute comparison module 202 configured to compare, in response to an instruction for newly adding a display interface from the plurality of display interfaces for displaying, a hierarchical attribute of a predetermined current display interface with a hierarchical attribute of the display interface to be newly added.

Moreover, as shown in Fig. 4, the display control apparatus (i.e., the onboard terminal device) 200 further comprises a display control module 203 configured to perform, based on the result of the comparison in the attribute comparison module 202, a corresponding operation on the current display interface and the display interface to be newly added. For example, in one embodiment, the display control module 203 controls, where the hierarchical attribute of the current display interface is different from the hierarchical attribute of the display interface to be newly added, or where the hierarchical attribute of the current display interface and the hierarchical attribute of the display interface to be newly added are the same and are both hierarchical superimposition attributes, the display module 201 to perform displaying in such a way that the display interface to be newly added is superimposed on the current display interface. In addition, in another embodiment, the display control module controls, where the hierarchical attribute of the current display interface and the hierarchical attribute of the display interface to be newly added are the same and are both hierarchical mutual exclusion attributes, the display module 201 to perform displaying in such a way that the current display interface is replaced with the display interface to be newly added by closing the current display interface.

Although implementations of the onboard terminal device, the display control method, and the display control apparatus have been mainly described above in the invention, the invention is not limited to these embodiments, and the invention may be implemented in a way of: a computer device for performing the method described above or a computer program for performing the method described above, or a computer program for implementing functions of apparatus described above or a computer-readable recording medium having the computer program recorded thereon.

Fig. 5 shows a computer device according to one implementation of the invention that is configured to perform a display control method according to one implementation of the invention. As shown in Fig. 5, the computer device 300 comprises a memory 301 and a processor 302. Although not shown, the computer device 300 further comprises a computer program that is stored on the memory 301 and executable on the processor 302. The program implements, when executed by the processor 302, various steps, for example as shown in Fig. 3, of the display control method according to one implementation of the invention.

In addition, as described above, the invention may also be implemented as a recording medium, which stores a program for enabling a computer to perform a display control method according to one implementation of the invention.

Here, various types of recording media, such as disks (e.g., a magnetic disk, an optical disk, etc.), cards (e.g., a memory card, an optical card, etc.), semiconductor memories (e.g., a ROM, a non-volatile memory, etc.), and tapes (e.g., a magnetic tape, a cassette tape, etc.), can be used as the recording medium.

By recording, in these recording media, a computer program that enables a computer to perform the display control method in the implementations above or a computer program that enables a computer to implement functions of the display control apparatus in the implementations above and circulating the computer program, costs are reduced, and portability and versatility are improved.

Furthermore, the recording medium is loaded on a computer, the computer reads the computer program recorded in the recording medium and stores same in a memory, and a processor (central processing unit (CPU) and a micro processing unit (MPU)) provided on the computer reads out and executes the computer program from the memory, whereby the display control method in the implementations above can be performed, and functions of the display control apparatus in the implementations above can be implemented.

## Claims

1. An onboard terminal device (100), comprising:
a display (101) configured to provide a plurality of display interfaces; and
a controller (102) configured to compare, in response to an instruction for newly adding a display interface from the plurality of display interfaces for displaying, a hierarchical attribute of a predetermined current display interface with a hierarchical attribute of the display interface to be newly added, each hierarchical attribute being one of a hierarchical superimposition attribute or a hierarchical mutual exclusion attribute, the controller being further configured to control, where the hierarchical attribute of the current display interface is different from the hierarchical attribute of the display interface to be newly added, or where the hierarchical attribute of the current display interface and the hierarchical attribute of the display interface to be newly added are the same and are both hierarchical superimposition attributes, the display to perform displaying in such a way that the display interface to be newly added is superimposed on the current display interface, and the controller being configured to control, where the hierarchical attribute of the current display interface and the hierarchical attribute of the display interface to be newly added are the same and are both hierarchical mutual exclusion attributes, the display to perform displaying in such a way that the current display interface is replaced with the display interface to be newly added by closing the current display interface.

2. A display control method (S100), which is used for an onboard terminal device, comprising:
a display step (S1) of providing a plurality of display interfaces;
an attribute comparison step (S2) of comparing, in response to an instruction for newly adding a display interface from the plurality of display interfaces for displaying, a hierarchical attribute of a predetermined current display interface with a hierarchical attribute of the display interface to be newly added, each hierarchical attribute being one of a hierarchical superposition attribute or a hierarchical mutual exclusion attribute, and
a display control step (S3) of performing, based on the result of the comparison, a corresponding operation on the current display interface and the display interface to be newly added,
wherein in the display control step, where the hierarchical attribute of the current display interface is different from the hierarchical attribute of the display interface to be newly added, or where the hierarchical attribute of the current display interface and the hierarchical attribute of the display interface to be newly added are the same and are both hierarchical superimposition attributes, control is performed for displaying in such a way that the display interface to be newly added is superimposed on the current display interface, and where the hierarchical attribute of the current display interface and the hierarchical attribute of the display interface to be newly added are the same and are both hierarchical mutual exclusion attributes, control is performed for displaying in such a way that the current display interface is replaced with the display interface to be newly added by closing the current display interface.

3. A computer program comprising processor-executable instructions which, when the program is executed by a computer device (300) comprising a memory (301) and a processor (302), the memory being configured to store the computer program and the processor being configured to run the executable instructions, cause the computer device to implement the steps of the method according to claim 2.

4. A recording medium having a computer program stored thereon, **characterized in that** the program, which when executed by a computer, implements the steps of the method according to claim 2.

## Patentansprüche

1. Fahrzeugseitige Endgerätevorrichtung (100), umfassend:
eine Anzeige (101), die dafür ausgelegt ist, mehrere Anzeigeschnittstellen bereitzustellen; und
eine Steuerung (102), die dafür ausgelegt ist, in Reaktion auf eine Anweisung, eine Anzeigeschnittstelle von den mehreren Anzeigeschnittstellen neu hinzuzufügen, ein hierarchisches Attribut einer vorbestimmten aktuellen Anzeigeschnittstelle mit einem hierarchischen Attribut der neu hinzuzufügenden Anzeigeschnittstelle zu vergleichen, wobei jedes hierarchische Attribut entweder ein hierarchisches Überlagerungsattribut oder ein hierarchisches gegenseitiges Ausschlussattribut ist, wobei die Steuerung ferner dafür ausgelegt ist, wenn das hierarchische Attribut der aktuellen Anzeigeschnittstelle von dem hierarchischen Attribut der neu hinzuzufügenden Anzeigeschnittstelle verschieden ist oder wenn das hierarchische Attribut der aktuellen Anzeigeschnittstelle und das hierarchische Attribut der neu hinzuzufügenden Anzeigeschnittstelle gleich sind und beide hierarchische Überlagerungsattribute sind, die Anzeige so zu steuern, dass die Anzeige der neu hinzuzufügenden Anzeigeschnittstelle der aktuellen Anzeigeschnittstelle überlagert wird, und wobei die Steuerung dafür ausgelegt ist, wenn das hierarchische Attribut der aktuellen Anzeigeschnittstelle und das hierarchische Attribut der neu hinzuzufügenden Anzeigeschnittstelle gleich sind und beide hierarchische gegenseitige Ausschlussattribute sind, die Anzeige so zu steuern, dass die Anzeige derart durchgeführt wird, dass die aktuelle Anzeigeschnittstelle durch die neu hinzuzufügende Anzeigeschnittstelle ersetzt wird, indem die aktuelle Anzeigeschnittstelle geschlossen wird.

2. Anzeigesteuerungsverfahren (S100),
das für eine fahrzeugseitige Endgerätvorrichtung verwendet wird, umfassend:
einen Anzeigeschritt (S1) des Bereitstellens mehrerer Anzeigeschnittstellen;
einen Attributvergleichsschritt (S2) des Vergleichens, in Reaktion auf eine Anweisung, eine Anzeigeschnittstelle von den mehreren Anzeigeschnittstellen neu hinzuzufügen, eines hierarchischen Attributs einer vorbestimmten aktuellen Anzeigeschnittstelle mit einem hierarchischen Attribut der neu hinzuzufügenden Anzeigeschnittstelle, wobei jedes hierarchische Attribut entweder ein hierarchisches Überlagerungsattribut oder ein hierarchisches gegenseitiges Ausschlussattribut ist, und
einen Anzeigesteuerungsschritt (S3) des Durchführens, basierend auf dem Ergebnis des Vergleichs, einer entsprechenden Operation auf der aktuellen Anzeigeschnittstelle und der neu hinzuzufügenden Anzeigeschnittstelle,
wobei im Anzeigesteuerungsschritt, wenn das hierarchische Attribut der aktuellen Anzeigeschnittstelle von dem hierarchischen Attribut der neu hinzuzufügenden Anzeigeschnittstelle verschieden ist oder wenn das hierarchische Attribut der aktuellen Anzeigeschnittstelle und das hierarchische Attribut der neu hinzuzufügenden Anzeigeschnittstelle gleich sind und beide hierarchische Überlagerungsattribute sind, die Steuerung so durchgeführt wird, dass die Anzeige der neu hinzuzufügenden Anzeigeschnittstelle der aktuellen Anzeigeschnittstelle überlagert wird, und wenn das hierarchische Attribut der aktuellen Anzeigeschnittstelle und das hierarchische Attribut der neu hinzuzufügenden Anzeigeschnittstelle gleich sind und beide hierarchische gegenseitige Ausschlussattribute sind, die Steuerung so durchgeführt wird, dass die Anzeige der aktuellen Anzeigeschnittstelle durch die neu hinzuzufügende Anzeigeschnittstelle ersetzt wird, indem die aktuelle Anzeigeschnittstelle geschlossen wird.

3. Computerprogramm, das von einem Prozessor ausführbare Anweisungen umfasst, die, wenn das Programm von einer Computervorrichtung (300) ausgeführt wird, die einen Speicher (301) und einen Prozessor (302) umfasst, wobei der Speicher dafür ausgelegt ist, das Computerprogramm zu speichern, und der Prozessor dafür ausgelegt ist, die ausführbaren Anweisungen auszuführen, die Computervorrichtung veranlassen, die Schritte des Verfahrens gemäß Anspruch 2 zu implementieren.

4. Aufzeichnungsmedium mit einem darauf gespeicherten Computerprogramm, **dadurch gekennzeichnet, dass** das Programm, wenn es von einem Computer ausgeführt wird, die Schritte des Verfahrens gemäß Anspruch 2 implementiert.

## Revendications

1. Dispositif terminal embarqué (100), comprenant :
une unité d'affichage (101) configurée pour fournir une pluralité d'interfaces d'affichage ; et
une unité de commande (102) configurée pour comparer, en réponse à une instruction d'ajouter nouvellement une interface d'affichage parmi la pluralité d'interfaces d'affichage pour l'affichage, un attribut hiérarchique d'une interface d'affichage actuelle prédéterminée à un attribut hiérarchique de l'interface d'affichage devant être ajoutée nouvellement, chaque attribut hiérarchique étant un d'un attribut de superposition hiérarchique ou d'un attribut d'exclusion mutuelle hiérarchique, l'unité de commande étant en outre configurée pour commander, lorsque l'attribut hiérarchique de l'interface d'affichage actuelle est différent de l'attribut hiérarchique de l'interface d'affichage devant être ajoutée nouvellement, ou lorsque l'attribut hiérarchique de l'interface d'affichage actuelle et l'attribut hiérarchique de l'interface d'affichage devant être ajoutée nouvellement sont les mêmes et sont tous les deux des attributs de superposition hiérarchiques, l'unité d'affichage pour qu'elle réalise l'affichage de manière telle que l'interface d'affichage devant être ajoutée nouvellement est superposée sur l'interface d'affichage actuelle, et l'unité de commande étant configurée pour commander, lorsque l'attribut hiérarchique de l'interface d'affichage actuelle et l'attribut hiérarchique de l'interface d'affichage devant être ajoutée nouvellement sont les mêmes et sont tous les deux des attributs d'exclusion mutuelle hiérarchiques, l'unité d'affichage pour qu'elle réalise l'affichage de manière telle que l'interface d'affichage actuelle est remplacée avec l'interface d'affichage devant être ajoutée nouvellement, en fermant l'interface d'affichage actuelle.

2. Procédé de commande d'unité d'affichage (S100), qui est utilisé pour un dispositif terminal embarqué, comprenant :
une étape d'affichage (S1) consistant à fournir une pluralité d'interfaces d'affichage ;
une étape de comparaison d'attributs (S2) consistant à comparer, en réponse à une instruction d'ajouter nouvellement une interface d'affichage parmi la pluralité d'interfaces d'affichage pour l'affichage, un attribut hiérarchique d'une interface d'affichage actuelle prédéterminée à un attribut hiérarchique de l'interface d'affichage devant être ajoutée nouvellement, chaque attribut hiérarchique étant un d'un attribut de superposition hiérarchique ou d'un attribut d'exclusion mutuelle hiérarchique, et
une unité de commande d'affichage (S3) consistant à réaliser, sur la base du résultat de la comparaison, une opération correspondante sur l'interface d'affichage actuelle et l'interface d'affichage devant être ajoutée nouvellement,
dans lequel, dans l'étape de commande d'affichage, lorsque l'attribut hiérarchique de l'interface d'affichage actuelle est différent de l'attribut hiérarchique de l'interface d'affichage devant être ajoutée nouvellement, ou lorsque l'attribut hiérarchique de l'interface d'affichage actuelle et l'attribut hiérarchique de l'interface d'affichage devant être ajoutée nouvellement sont les mêmes et sont tous les deux des attributs de superposition hiérarchiques, une commande est réalisée pour l'affichage de manière telle que l'interface d'affichage devant être ajoutée nouvellement est superposée sur l'interface d'affichage actuelle, et lorsque l'attribut hiérarchique de l'interface d'affichage actuelle et l'attribut hiérarchique de l'interface d'affichage devant être ajoutée nouvellement sont les mêmes et sont tous les deux des attributs d'exclusion mutuelle hiérarchiques, une commande est réalisée pour l'affichage de manière telle que l'interface d'affichage actuelle est remplacée avec l'interface d'affichage devant être ajoutée nouvellement, en fermant l'interface d'affichage actuelle.

3. Programme d'ordinateur comprenant des instructions exécutables par processeur qui, quand le programme est exécuté par un dispositif d'ordinateur (300) comprenant une mémoire (301) et un processeur (302), la mémoire étant configurée pour stocker le programme d'ordinateur et le processeur étant configuré pour exploiter les instructions exécutables, amènent le dispositif d'ordinateur à mettre en œuvre les étapes du procédé selon la revendication 2.

4. Support d'enregistrement ayant un programme d'ordinateur stocké sur celui-ci, **caractérisé en ce que** le programme, quand il est exécuté par un ordinateur, met en œuvre les étapes du procédé selon la revendication 2.
